# FASCICULE DE BREVET EUROPEEN

(11) **EP 0 598 636 B1**
(45) Date de publication et mention de la délivrance du brevet: **23.07.1997**
(21) Numéro de dépôt: 93402587.5
(22) Date de dépôt: 21.10.1993
(51) Int. Cl.: A01C 7/04

(54) **Semoir de précision**
Einzelkornsämaschine
Precision seeddrill

(30) Priorité: 22.10.1992 FR 9212661
(43) Date de publication de la demande: 25.05.1994
(73) Titulaire: CENTRE NATIONAL DU MACHINISME AGRICOLE, DU GENIE RURAL, DES EAUX ET DES FORETS (CEMAGREF), F-92160 Antony (FR)
(72) Inventeur: Marionneau, Anicet, F-91310 Longpont sur Orge (FR)
(74) Mandataire: Dawidowicz, Armand

(56) Documents cités:
- FR-A- 1 503 687
- FR-A- 2 291 927
- FR-A- 2 339 326
- FR-A- 2 641 441
- GB-A- 2 217 043
- US-A- 2 505 758

## Description

Le semis est une opération prépondérante pour la rentabilité des entreprises agricoles, à la fois par la précision de pose des graines, l'unicité de dépôt, l'absence d'endommagement des graines. Tous ces facteurs, lorsqu'ils ne sont pas optimisés, ont pour résultat une diminution du rendement et/ou une consommation de graines trop élevée. De plus, la réduction des charges des entreprises agricoles nécessite de pouvoir utiliser les semoirs pour des graines différentes, tout en conservant les qualités mentionnées précédemment.

Les semoirs dits "en ligne", utilisés pour les semis de céréales et de petites graines (colza, sorgho, etc) utilisent en général une sélection de type mécanique, mais leur précision est insuffisante pour certaines graines, aussi bien en ce qui concerne la densité de semis que la répartition sur chaque rang.

On connaît également des semoirs dits "monograine" distribuant les graines une à une, le plus souvent avec une sélection pneumatique, qui permettent une grande précision de placement et sont utilisés par exemple pour la betterave, le tournesol, le maïs, le soja, etc.

Ces derniers semoirs, également dits "de précision" ont connu un développement important mais souffrent encore de divers inconvénients concernant le coût à l'achat, le coût en exploitation lié à la vitesse de semis, ainsi que la facilité d'adaptation à des semis différents. Les semoirs de précision connus donnent en effet satisfaction dans le cas où la nature des graines nécessite une distance importante entre les rangs et une densité relativement faible sur les lignes, comme c'est le cas en particulier pour la betterave, le maïs ou le tournesol. Par contre, ils ne conviennent pas pour le semis des céréales où les graines de petites dimensions nécessitent une densité de semis bien plus élevée tout en requérant des espacements précis pour un rendement optimal de la culture.

Certaines propositions effectuées sur des semoirs connus (voir par exemple FR-A-2.638.054, FR-A-2.662.903, FR-A-2.549.341, FR-A-2.445.684, FR-A-2.210.887, US-A-3.848.552, US-A-1.371.517 ou US-A-1.637.834) prévoient d'aspirer les graines contre des orifices ménagés dans une bande ou à l'intérieur d'un tambour perforé. Certains de ces dispositifs connus prévoient des moyens pour s'assurer qu'une graine et une seule est présente sur chaque orifice mais aucune de ces propositions ne permet de résoudre de manière satisfaisante les problèmes posés dans le cas d'un semoir monograine.

On connait par ailleurs, par FR-A-2.339.326, un semoir selon le préambule de la revendication 1 qui prévoit de maintenir les graines sur la face externe d'un tambour perforé au moyen d'une pression différentielle utilisée également pour acheminer la graine de la zone de libération jusqu'au sol. Cependant, ce transfert des graines jusqu'au sol, effectué par des tubes flexibles terminés en forme d'entonnoir, est très imprécis, en particulier à des vitesses de rotation élevées du tambour, ce qui fait perdre tout l'avantage de la structure de sélection en amont dans la machine. Ce dispositif connu présente en outre d'autres inconvénients.

C'est ainsi qu'un semoir adapté aux céréales doit être polyvalent, de manière à accepter toutes les graines de 2mm à 15mm, à permettre une modification rapide des écartements entre rangs et à autoriser un changement rapide du type de graines grâce à une vidange et à un remplissage rapides. Il doit bien entendu assurer une grande précision de l'écartement des graines à leur arrivée dans le sillon tout en autorisant une vitesse de semis très élevée. Un tel semoir doit également posséder un réglage de débit précis, simple à utiliser et proportionnel à l'avancement; il doit aussi être compact et léger pour être associé facilement aux outils de travail du sol lorsque, comme c'est souvent le cas, le semis et la préparation du lit de semence sont effectués simultanément. Pour optimiser le semis, le semoir doit disposer de moyens de réglage automatique de la sélection permettant d'éliminer de manière sûre les doubles et les manques, malgré la vitesse élevée du semis. Un tel semoir doit en outre éviter les chocs violents sur les graines au cours de leur sélection et de leur transfert.

A cet effet, l'invention a pour objet un semoir de précision du type comprenant des moyens d'amenée des graines sur un dispositif de sélection du type à tambour perforé rotatif un moyen agissant sur le dispositif de sélection par pression d'air pour plaquer les graines contre les perforations dudit tambour, des moyens pour sélectionner une graine et une seule sur chaque perforation, ainsi que des moyens de séparation pour séparer les graines du tambour, les évacuer et les déposer dans des sillons préalablement tracés dans le sol, ledit tambour perforé constituant une paroi d'une trémie contenant les graines à distribuer et maintenue sous pression, avec des moyens d'agitation des graines à l'intérieur de ladite trémie, les moyens de séparation permettant d'obturer les perforations dudit tambour perforé à la sortie de ladite trémie et comprenant des roulettes disposées à l'intérieur du tambour perforé éventuellement munies d'un bandage souple, par exemple en caoutchouc, et roulant chacune sur la paroi interne du tambour dans l'axe de chaque rangée de perforations avec une légère pression provoquée par un ressort, caractérisé en ce que les moyens d'évacuation et de dépose des graines séparées du tambour comprennent une pluralité de tubes semi-rigides et lisses dont une extrémité est disposée sensiblement tangentiellement à l'extérieur du tambour au voisinage de chaque roulette, l'ensemble des tubes étant emboîté dans une pièce munie de fraisages correspondants tangents à la surface périphérique du tambour, l'extrémité des tubes communiquant avec l'intérieur de la trémie.

La disposition tangentielle des tubes d'évacuation assure un transfert extrêmement précis des graines libérées sur le tambour exactement en regard des extrémités tangentielles des tubes d'évacuation.

Pour permettre un réglage et/ou une adaptation à la vitesse de rotation et/ou à la nature des graines, on peut prévoir que ladite pièce dans laquelle sont emboîtés lesdits tubes est montée réglable circonférenciellement à la périphérie du tambour.

Selon une forme de réalisation de l'invention, les moyens d'agitation des graines à l'intérieur de la trémie comprennent des dispositifs mécaniques du type constitué par un axe muni d'ergots entraîné à une vitesse proportionnelle à celle du tambour. En variante ou en complément, l'invention prévoit que les moyens d'agitation des graines à l'intérieur de la trémie comprennent des moyens pneumatiques assurant la formation d'un lit fluidisé de graines en suspension au voisinage de la surface périphérique du tambour perforé. De préférence, un déflecteur recouvre une portion du tambour perforé à l'intérieur de la trémie en libérant une portion amont dudit tambour dans sa direction de rotation.

Avantageusement, l'invention prévoit que les moyens de sélection des graines comprennent une plaque courbée parallèlement à la périphérie du tambour et écartée dudit tambour à l'intérieur de la trémie, ladite plaque laissant libre la région d'action des moyens d'agitation des graines, ladite plaque comportant des plots dirigés vers le tambour et disposés selon des lignes d'au moins deux plots pour chaque rang circonférenciel de perforations du tambour, lesdites lignes étant inclinées par rapport à la circonférence respective du tambour et les plots étant disposés de telle manière que le premier plot rencontré dans le sens de rotation du tambour et le dernier plot sont écartés d'une distance approximativement égale à la moitié du plus grand diamètre des perforations du tambour. On assure ainsi le maintien d'une seule graine sur chaque trou. Avantageusement, ladite plaque est mobile en rotation à une extrémité autour d'un axe parallèle à l'axe du tambour et en appui sur le tambour à son autre extrémité au moyen de roulettes, de manière à pouvoir régler l'écartement des extrémités libres des plots par rapport à la périphérie du tambour. Les extrémités des plots peuvent être arrondies, plates et inclinées par rapport au défilement des graines, striées, coniques ou de toute autre forme facilitant le décrochage des graines en surplus.

Selon une caractéristique importante de l'invention, la plaque de sélection des graines est réglable en position axiale afin d'optimiser l'action de sélection en fonction du résultat constaté ou mesuré.

De préférence, le déplacement axial de ladite plaque est commandé automatiquement en fonction des données fournies par un capteur détectant le nombre et l'écartement des graines dans un rang. On obtient ainsi automatiquement une optimisation du semis. Avantageusement, ladite commande automatique est accouplée à une alarme qui est actionnée dans le cas d'une réduction prédéterminée du nombre de graines sélectionnées, ce qui correspond à un défaut de fonctionnement.

Avantageusement, les perforations du tambour perforé sont réglables, par exemple par superposition d'une feuille perforée dont les perforations sont axées sur les perforations du tambour et ont un diamètre inférieur. On peut ainsi régler le diamètre des orifices en fonction des graines à semer.

Pour régler l'écartement des rangs de semis, l'invention prévoit des moyens de suppression d'un ou plusieurs rangs, par exemple par un déflecteur effaçable chassant toutes les graines du rang correspondant ou par bouchage des perforations du rang correspondant.

L'invention sera bien comprise à la lecture de la description suivante faite en se référant au dessin annexé dans lequel :
La figure 1 est une vue schématique en perspective, avec arrachement partiel, du système de sélection et de distribution d'un semoir selon un exemple de réalisation de l'invention,
la figure 2 est un schéma illustrant le mode de fonctionnement du semoir,
la figure 3 est une vue schématique en élévation latérale d'un détail A de l'ensemble de la figure 1, et
la figure 4 est une vue schématique en élévation latérale et coupe d'un détail B de l'ensemble de la figure 1.

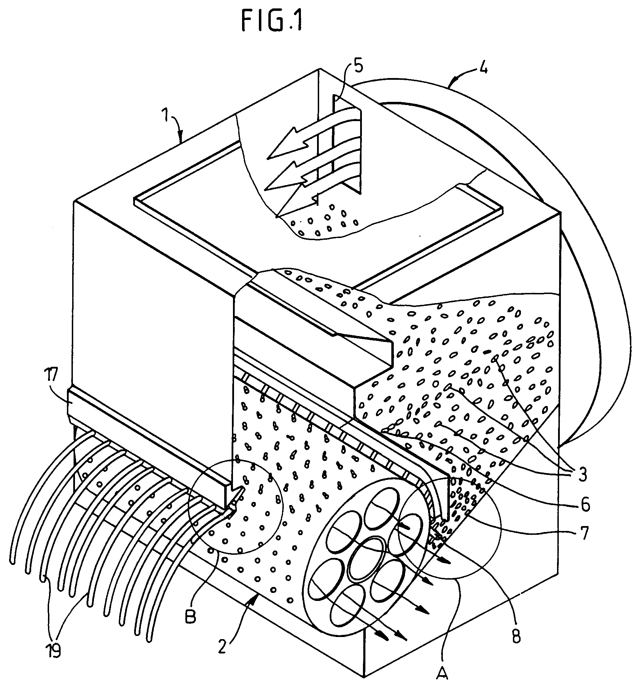

L'ensemble représenté à la figure 1 comprend une trémie 1 sensiblement parallélépipédique dont la partie inférieure frontale est fermée par un tambour perforé rotatif 2. La trémie 1 est remplie de graines 3 et est mise en pression par un ventilateur 4 envoyant de l'air sous pression par une ouverture 5 ménagée et en haut de la trémie 1.

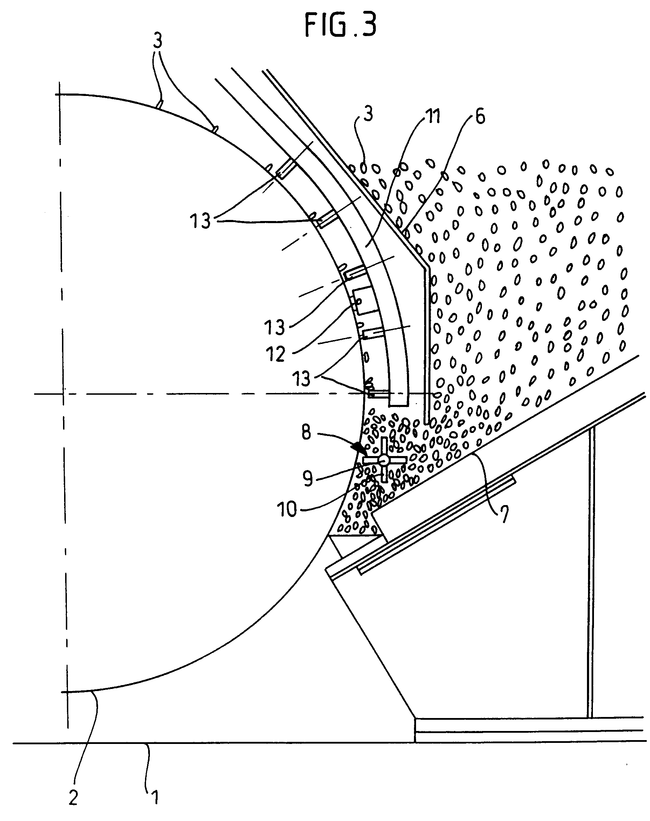

Le tambour 2 est partiellement isolé de l'intérieur de la trémie 1 par un déflecteur 6 qui libère une bande inférieure entre le tambour 2 et un fond incliné 7 de la trémie 1. Les graines 3 sont ainsi concentrées au voisinage de la périphérie inférieure du tambour 2 se trouvant à l'intérieur de la trémie, où elles sont agitées au moyen d'un agitateur 8 constitué par un axe 9 (figure 3) parallèle à l'axe du tambour 2 et muni d'ergots 10, ledit axe 9 étant entraîné en rotation à une vitesse proportionnelle à celle du tambour 2. Les ergots 10 sont décalés par rapport aux axes des perforations du tambour 2. L'agitateur 8 peut être remplacé ou complété par des moyens pneumatiques (non représentés) créant un lit fluidisé de graines 3 au voisinage du tambour 2.

La pression régnant à l'intérieur de la trémie 1 pousse des graines 3 contre les perforations du tambour 2 qui sont ainsi obturées. Pour éviter que plus d'une graine 3 ne se fixe ainsi à une même perforation, un dispositif de sélection constitué d'une plaque courbe 11 concentrique au tambour 2 est disposé à une distance prédéterminée de ce tambour à l'abri du déflecteur 6. La plaque 11 s'appuie sur le tambour 2 par des roulettes 12 et comporte des plots 13 dirigés vers le tambour 2.

Les plots 13 sont disposés par groupes, de cinq plots dans l'exemple représenté, chaque groupe étant affecté à un rang circulaire de perforations du tambour 2. Dans chaque groupe, les plots 13 sont disposés selon une ligne oblique par rapport au plan diamétral du rang correspondant, l'écartement entre les deux plots 13 extrêmes étant sensiblement égal à la moitié du diamètre de la plus grosse perforation utilisée. Les graines 3 en double sur une perforation du tambour 2 sont ainsi éliminées de manière sûre. La plaque courbe 11 est mobile autour d'un axe parallèle au tambour 2 (non représenté) dans sa partie haute et s'appuie en partie basse sur les roulettes 12.

Les plots comportent une extrémité libre conformée pour optimiser le décrochage des doubles graines en fonction de leur forme ou de leur rugosité. La forme de l'extrémité des plots peut être par exemple ronde, plate avec un angle par rapport au défilement des graines, striée, conique, etc.

La plaque 11 peut en outre être déplacée parallèlement à l'axe du tambour 2 afin d'affiner le positionnement des rangs de plots 13 par rapport aux circonférences correspondantes du tambour 2. Ce réglage, qui résulte d'observations ou de mesures concernant la régularité et la distance d'écartement des graines ainsi que le débit instantané, peut être effectué manuellement au moyen d'une vis (non représentée). Mais, de préférence, le semoir comprend au moins un capteur mesurant les paramètres de passage des graines 3 d'un rang et envoyant ces données à un calculateur (non représenté). Le calculateur compare ces données à des courbes idéales correspondant à un écartement constant prédéterminé et à une densité optimale des graines et commande le coulissement de la plaque 11 lorsque les mesures s'écartent des courbes idéales. Si le débit diminue en-dessous d'un seuil prédéterminé indiquant par exemple une obturation permanente de perforations du tambour 2, le calculateur commande le déclenchement d'une alarme. On dispose ainsi de moyens automatiques d'optimisation du fonctionnement du semoir.

A la sortie du tambour 2 par rapport à la trémie 1, le semoir comprend des moyens de séparation des graines 3 retenues sur chaque perforation du tambour 2 afin de les envoyer à un dispositif de mise en terre (non représenté). Ces moyens, représentés plus en détail à la figure 4, comprennent une roulette 14 par rang circonférentiel de perforations et mise en appui sur la circonférence de perforations correspondante, à l'intérieur du tambour 2, au moyen d'un ressort 15 agissant sur un levier 16 portant la roulette 14. De préférence, la surface de la roulette 14 porte un revêtement élastique, par exemple du caoutchouc. L'ensemble assure un bouchage successif de chaque perforation d'une circonférence, en libérant la graine 3 de la différence de pression existant dans l'intérieur de la trémie 1 et l'intérieur du tambour 2. En outre, les graines 3 ou des impuretés dépassant à l'intérieur du tambour 2 sont systématiquement repoussées à l'extérieur du tambour.

Entre la paroi adjacente de la trémie 1 et le tambour 2 est insérée une pièce 17 en matière plastique couvrant la longueur du tambour 2 et munie d'alésages traversants 18 dans chacun desquels est enfoncée à force, à l'extérieur de la trémie 2, une extrémité d'un tube 19 semi-rigide à intérieur lisse. L'alésage 18 comporte un fraisage tangent au tambour 2 permettant le passage dans le tube 19 de la graine 3 libérée de la pression d'application contre l'orifice correspondant du tambour 2. Au contraire, la pression régnant dans la trémie 1 pénètre dans l'extrémité interne de l'alésage 18 et assure ainsi un transport pneumatique des graines dans le tube 19, sans chocs ni frottement, jusqu'au dispositif de mise en terre correspondant. On peut prévoir, pour permettre un réglage et/ou une adaptation ou à la vitesse de rotation et/ou à la nature des graines que la pièce 17 est réglable circonférenciellement à la périphérie du tambour 2.

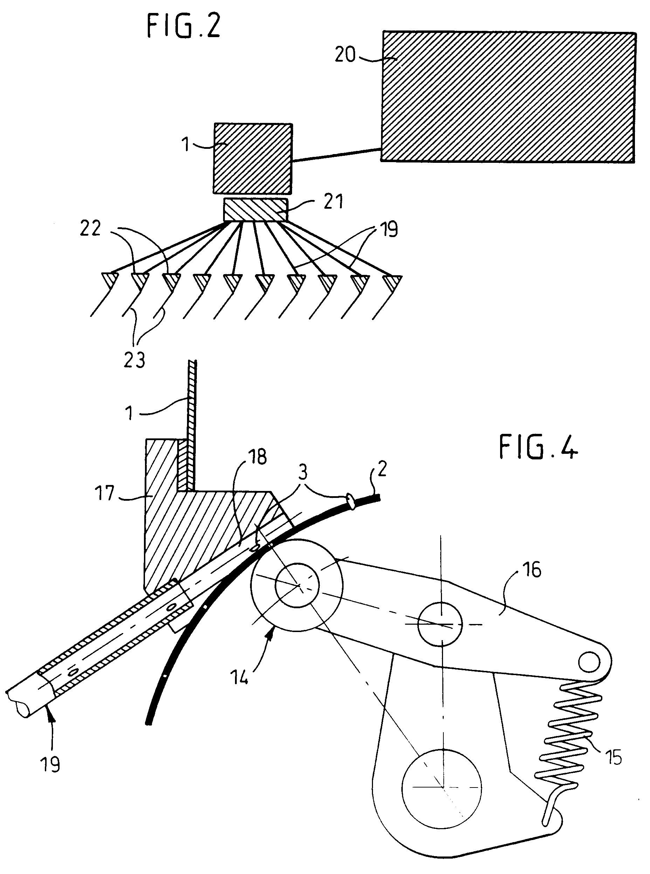

De préférence, comme indiqué schématiquement à la figure 2, la trémie 1 peut être alimentée par une trémie principale 20 lorsque la quantité de semence par hectare est importante, ce qui est le cas en particulier pour les céréales. On dispose ainsi d'un semoir dans lequel une trémie unique intermédiaire 1 permet d'effectuer une sélection centrale par un sélecteur 21 qui amène les graines 3, par les tubes 19, à l'arrière de dispositifs 22 creusant des sillons 23.

Le dispositif qui vient d'être décrit permet un vidage et un remplissage simples et rapides pour changer les graines à semer. Le tambour 2 est facilement démontable pour l'échanger contre un autre tambour adapté aux nouvelles graines ou pour le recouvrir par une feuille perforée dont les perforations coïncident avec celles du tambour 2 mais avec un diamètre inférieur correspondant aux nouvelles graines. En variante, les perforations peuvent être munies de moyens de modification de leur diamètre, par exemple du type iris.

Pour supprimer à volonté un ou plusieurs rangs de semis, on peut prévoir de munir au moins une circonférence de perforations de moyens d'obturation amovibles ou un déflecteur mobile pour un rang dont les graines doivent être totalement éliminées.

Le tambour 2 est entraîné à une vitesse proportionnelle à l'avancement. On modifie l'écartement entre les graines sur le rang en faisant varier le rapport de proportionnalité. Ce rapport peut être obtenu soit par des moyens mécaniques soit par un dispositif électronique comparant en temps réel la vitesse d'avancement et la vitesse de rotation du tambour 2.

## Revendications

1. Semoir de précision du type comprenant des moyens d'amenée (1, 4, 5) des graines (3) sur un dispositif de sélection du type à tambour perforé rotatif (2), un moyen agissant sur le dispositif de sélection par pression d'air pour plaquer les graines (3) contre les perforations dudit tambour (2), des moyens (11, 12, 13) pour sélectionner une graine (3) et une seule sur chaque perforation, ainsi que des moyens de séparation (14, 15, 16) pour séparer les graines (3) du tambour (2), les évacuer et les déposer (17, 18, 19) dans des sillons (23) préalablement tracés dans le sol, ledit tambour perforé (2) constituant une paroi d'une trémie contenant les graines (3) à distribuer et maintenue sous pression, avec des moyens d'agitation (8) des graines (3) à l'intérieur de ladite trémie (1), les moyens de séparation permettant d'obturer les perforations dudit tambour perforé (2) à la sortie de ladite trémie (1) et comprenant des roulettes (14) disposées à l'intérieur du tambour perforé (2) éventuellement munies d'un bandage souple, par exemple en caoutchouc, et roulant chacune sur la paroi interne du tambour (2) dans l'axe de chaque rangée de perforations avec une légère pression provoquée par un ressort (15),
caractérisé en ce que les moyens d'évacuation et de dépose des graines (3) séparées du tambour (2) comprennent une pluralité de tubes (19) semi-rigides et lisses dont une extrémité est disposée sensiblement tangentiellement à l'extérieur du tambour (2) au voisinage de chaque roulette (14), l'ensemble des tubes (19) étant emboîté dans une pièce (17) munie de fraisages correspondants tangents à la surface périphérique du tambour (2), l'extrémité des tubes (19) communiquant avec l'intérieur de la trémie (1).

2. Semoir de précision selon la revendication 1,
caractérisé en ce que ladite pièce (17) dans laquelle sont emboîtés lesdits tubes (19) est montée réglable circonférentiellement à la périphérie du tambour (2).

3. Semoir de précision selon l'une des revendications 1 et 2,
caractérisé en ce que les moyens (8) d'agitation des graines à l'intérieur de la trémie comprennent des dispositifs mécaniques du type constitué par un axe (9) muni d'ergots (10) entraîné à une vitesse proportionnelle à celle du tambour (2).

4. Semoir de précision selon l'une des revendications 1 à 3,
caractérisé en ce que les moyens (8) d'agitation des graines (3) à l'intérieur de la trémie (1) comprennent des moyens pneumatiques assurant la formation d'un lit fluidisé de graines (3) en suspension au voisinage de la surface périphérique du tambour perforé.

5. Semoir de précision selon l'une des revendications 1 à 4,
caractérisé en ce qu'un déflecteur (6) recouvre une portion du tambour perforé (2) à l'intérieur de la trémie (1) en libérant une portion amont dudit tambour (2) dans sa direction de rotation.

6. Semoir de précision selon l'une des revendications 1 à 5,
caractérisé en ce que les moyens de sélection des graines comprennent une plaque courbée (11) parallèlement à la périphérie du tambour (2) et écartée dudit tambour (2) à l'intérieur de la trémie (1), ladite plaque (11) laissant libre la région d'action des moyens (8) d'agitation des graines (3), ladite plaque (11) comportant des plots (13) dirigés vers le tambour (2) et disposés selon des lignes d'au moins deux plots (13) pour chaque rang circonférenciel de perforations du tambour (2), lesdites lignes étant inclinées par rapport à la circonférence respective du tambour (2) et les plots (13) étant disposés de telle manière que le premier plot (13) rencontré dans le sens de rotation du tambour (2) et le dernier plot (13) sont écartés d'une distance approximativement égale à la moitié du diamètre des plus grosses perforations du tambour (2).

7. Semoir de précision selon la revendication 6,
caractérisé en ce que ladite plaque (11) est mobile en rotation à une extrémité autour d'un axe parallèle à l'axe du tambour (2) et en appui sur le tambour (2) à son autre extrémité au moyen de roulettes (12).

8. Semoir de précision selon l'une des revendications 6 et 7,
caractérisé en ce que les plots (13) comportent une extrémité libre conformée pour optimiser le décrochage des doubles graines en fonction de leur forme ou de leur rugosité, par exemple ronde, plate avec un angle par rapport au défilement des graines, striée, conique.

9. Semoir de précision selon l'une des revendications 6 à 8,
caractérisé en ce que la plaque (11) de sélection des graines (3) est réglable en position axiale (8).

10. Semoir de précision selon la revendication 9,
caractérisé en ce que le déplacement axial de ladite plaque (11) est commandé automatiquement en fonction des données fournies par un capteur détectant le nombre et l'écartement des graines dans un rang.

11. Semoir de précision selon la revendication 10,
caractérisé en ce que ladite commande automatique est accouplée à une alarme qui est actionnée dans le cas d'une réduction prédéterminée du nombre de graines (3) sélectionnées.

12. Semoir de précision selon l'une des revendications 1 à 11,
caractérisé en ce que les perforations du tambour perforé (2) sont réglables, par exemple par superposition d'une feuille perforée dont les perforations sont axées sur les perforations du tambour (2) et ont un diamètre inférieur.

13. Semoir de précision selon l'une des revendications 1 à 12,
caractérisé en ce qu'il comprend des moyens de suppression d'un ou plusieurs rangs, par exemple par un déflecteur effaçable chassant toutes les graines (3) du rang correspondant ou par bouchage des perforations du rang correspondant.

## Claims

1. A precision seed-drill of the type comprising means (1, 4, 5) for feeding grains (3) on to a selection device (2) of rotary perforated drum type, means acting by air pressure on the selection device to place the grains (3) against the perforations of the said drum (2), means (11, 12, 13) for selecting one and only one grain (3) for each perforation, as well as separating means (14, 15, 16) for separating the grains (3) from the drum (2) and discharging them and depositing them (17, 18, 19) in the rills (23) previously traced in the ground, the said perforated drum (2) forming a wall of a hopper containing the grains (3) to be distributed and kept under pressure, with means (8) for agitating the grains (3) inside the said hopper (1), the separating means enabling the perforations of the said perforated drum (2) to be blocked at the outlet of the said hopper (1) and comprising rollers (14) located inside the perforated drum (2), optionally fitted with a flexible covering, of rubber for example, and each rolling on the internal wall of the drum (2) on the axis of each row of perforations, under light pressure provided by a spring (15), characterized in that the means for discharging and depositing the grains (3) separated from the drum (2) comprise a plurality of semi-rigid, smooth tubes (19) of which one end is located substantially tangentially on the outside of the drum (2) in the vicinity of each roller (14), the set of tubes (19) being inserted into a part (17) provided with corresponding recesses tangential to the peripheral surface of the drum (2) and the ends of the tubes communicating with the interior of the hopper (1).

2. A precision seed drill according to claim 1, characterized in that the said part (17) into which the said tubes (19) are set is fitted so as to be adjustable circumferentially at the periphery of the drum (2).

3. A precision seed drill according to claim 1 or 2, characterized in that the means (8) for agitating the grains inside the hopper comprise mechanical devices of the type formed by a shaft (9) fitted with projections (10), driven at a speed proportional to that of the drum (2).

4. A precision seed drill according to any of claims 1 to 3, characterized in that the means (8) for agitating the grains (3) inside the hopper (1) comprise pneumatic means forming a fluidised bed of the grains (3) suspended in the vicinity of the peripheral surface of the perforated drum.

5. A precision seed drill according to any of claims 1 to 4, characterized in that a deflector (6) covers part of the perforated drum (2) inside the hopper (1) and frees a part of the said drum (2) upstream in its direction of rotation.

6. A precision seed drill according to any of claims 1 to 5, characterized in that the means for selecting grains comprise a curved plate (11) parallel to the periphery of the drum (2) and spaced from the said drum (2) inside the hopper (1), the said plate (11) leaving free the region of action of the means (8) for agitating the grains (3), the said plate (11) having pegs (13) directed towards the drum and arranged in lines of at least two pegs (13) for each circumferential row of perforations of the drum (2) and the pegs (13) being positioned in such a manner that the first peg (13) encountered in the sense of rotation of the drum (2) and the last peg (13) are spaced by a distance approximately equal to half the diameter of the largest perforation of the drum (2).

7. A precision seed drill according to claim 6, characterized in that the said plate (11) can be turned about an axis at one end parallel to the axis of the drum (2) and bears via rollers (12) on the drum (2) at its other end.

8. A precision seed drill according to claim 6 or 7, characterized in that the pegs (13) have a free end shaped so as to optimise the separation of double grams in response to their shape or their roughness, for example rounded, flatted at an angle to the run of the grains, ribbed, conical.

9. A precision seed drill according to any of claims 6 to 8, characterized in that the plate (11) for selecting grains (3) can be adjusted in its axial position (8).

10. A precision seed drill according to claim 9, characterized in that the axial movement of the said plate (11) is controlled automatically in dependence on data provided by a sensor detecting the number and spacing of grains in a row.

11. A precision seed drill according to claim 10, characterized in that the said automatic control is coupled to an alarm which is actuated in the event of a predetermined reduction in the number of grains (3) selected.

12. A precision seed drill according to any of claims 1 to 11, characterized in that the perforations of the perforated drum (2) can be adjusted, for example by superimposing a perforated sheet whose perforations are in register with the perforations of the drum (2) by have a smaller diameter.

13. A precision seed drill according to any of claims 1 to 12, characterized in that it comprises means for suppressing one or more rows, for example by a removable deflector diverting all the grains (3) of the corresponding row or by blocking the perforations of the corresponding row.

## Patentansprüche

1. Präzisions-Sämaschine, mit Mitteln (1, 4, 5) zum Zuführen von Samenkörnern (3) zu einer Selektionsvorrichtung, die eine perforierte Drehtrommel (2) aufweist, mit einem Mittel, das auf die Selektionsvorrichtung durch Luftdruck einwirkt, um die Samenkörner (3) gegen die Perforationen der Trommel (2) zu bewegen, mit Mitteln (11, 12, 13) zum Auswählen eines einzigen Samenkornes (3) an jeder Perforation, sowie mit Trennmitteln (14, 15, 16), um die Samenkörner (3) von der Trommel (2) zu trennen, sie abzuführen und in vorher im Erdboden gezogene Furchen (23) abzulegen (17, 18, 19), wobei die perforierte Trommel (2) eine Wandung eines Vorratsbehälters bildet, der die zu verteilenden Samenkörner (3) enthält und unter Druck gehalten ist, mit Mitteln (8) zum Bewegen der Samenkörner (3) im Inneren des Vorratsbehälters (1), wobei die Trennmittel es ermöglichen, die Perforationen der perforierten Trommel (2) am Ausgang des Vorratsbehälters (1) zu verschließen und Rollen (14) aufweisen, die im Inneren der perforierten Trommel (2) angeordnet und ggf. mit einer elastischen Ummantelung, beispielsweise aus Gummi, versehen sind und jeweils an der inneren Wandung der Trommel (2) in der Achse jeder Reihe von Perforationen mit einem leichten, durch eine Feder (15) erzeugten Druck rollen,
**dadurch gekennzeichnet**, daß die Mittel zum Abführen und Ablegen der von der Trommel (2) getrennten Samenkörner (3) eine Mehrzahl von halbstarren und glatten Röhren (19) aufweisen, deren eines Ende im wesentlichen tangential zum Äußeren der Trommel (2) im Bereich jeder Rolle (14) angeordnet ist, wobei die Gesamtheit der Röhren (19) in ein Teil (17) eingefügt ist, das mit Fräsungen versehen ist, die Tangenten an die Umfangsfläche der Trommel (2) entsprechen, wobei das Ende der Röhren (19) mit dem Inneren des Vorratsbehälters (1) in Verbindung steht.

2. Präzisions-Sämaschine nach Anspruch 1,
**dadurch gekennzeichnet**, daß das Teil (17), in das die Röhren (19) eingefügt sind, zum Umfang der Trommel (2) verstellbar angeordnet ist.

3. Präzisions-Sämaschine nach einem der Ansprüche 1 und 2,
**dadurch gekennzeichnet**, daß die Mittel (8) zum Bewegen der Samenkörner im Inneren des Vorratsbehälters mechanische Vorrichtungen aufweisen, die durch eine mit Vorsprüngen (10) versehene Achse (9) gebildet sind, die mit einer zur Geschwindigkeit der Trommel (2) proportionalen Geschwindigkeit angetrieben wird.

4. Präzisions-Sämaschine nach einem der Ansprüche 1 bis 3,
**dadurch gekennzeichnet**, daß die Mittel (8) zum Bewegen der Samenkörner (3) im Inneren des Vorratsbehälters (1) pneumatische Mittel aufweisen, die die Bildung eines schwebenden Fließbettes von Samenkörnern (3) im Bereich der Umfangsfläche der perforierten Trommel sicherstellen.

5. Präzisions-Sämaschine nach einem der Ansprüche 1 bis 4,
**dadurch gekennzeichnet**, daß ein Abweiser (6) einen Teil der perforierten Trommel (2) im Inneren des Vorratsbehälters (1) abdeckt, wobei er einen in Drehrichtung der Trommel (2) vor dieser befindlichen Teil freiläßt.

6. Präzisions-Sämaschine nach einem der Ansprüche 1 bis 5,
**dadurch gekennzeichnet**, daß die Mittel zum Auswählen der Samenkörner eine parallel zum Umfang der Trommel (2) gekrümmte und von der Trommel (2) im Inneren des Vorratsbehälters (1) beabstandete Platte (11) aufweisen, wobei die Platte (11) den Arbeitsbereich der Mittel (8) zum Bewegen der Samenkörner (3) freiläßt, wobei die Platte (11) Ansätze (13) aufweist, die auf die Trommel (2) gerichtet und entlang von Linien von wenigstens zwei Ansätzen (13) für jede Umfangsreihe von Perforationen der Trommel (2) angeordnet sind, wobei die Linien in Bezug zum jeweiligen Umfang der Trommel (2) geneigt sind und die Ansätze (13) derart angeordnet sind, daß der in Drehrichtung der Trommel (2) erste Ansatz (13) und der letzte Ansatz (13) um eine Distanz voneinander beabstandet sind, die ungefähr der Hälfte des Durchmessers der größten Perforationen der Trommel (2) entspricht.

7. Präzisions-Sämaschine nach Anspruch 6,
**dadurch gekennzeichnet**, daß die Platte (11) an einem Ende um eine zu der Achse der Trommel (2) parallele Achse drehbeweglich ist und an ihrem anderen Ende an der Trommel (2) mittels Rollen (12) anliegt.

8. Präzisions-Sämaschine nach einem der Ansprüche 6 und 7,
**dadurch gekennzeichnet**, daß die Ansätze (13) ein freies Ende aufweisen, das derart ausgebildet ist, daß das Trennen doppelter Samenkörner in Abhängigkeit von ihrer Form und ihrer Rauhigkeit optimiert ist, beispielsweise rund, flach mit einem Winkel in Bezug zum Ablauf der Samenkörner, gerieft, konisch.

9. Präzisions-Sämaschine nach einem der Ansprüche 6 bis 8,
**dadurch gekennzeichnet**, daß die Platte (11) zum Auswählen der Samenkörner (3) in ihrer axialen Lage (8) verstellbar ist.

10. Präzisions-Sämaschine nach Anspruch 9,
**dadurch gekennzeichnet**, daß die axiale Verschiebung der Platte (11) automatisch gesteuert ist in Abhängigkeit von Richtwerten, die durch einen Aufnehmer geliefert werden, der die Anzahl und den Abstand der Samenkörner in einer Reihe detektiert.

11. Präzisions-Sämaschine nach Anspruch 10,
**dadurch gekennzeichnet**, daß die automatische Steuerung an einen Alarm angekoppelt ist, der im Falle einer vorbestimmten Verringerung der Anzahl von selektierten Samenkörnern (3) betätigt wird.

12. Präzisions-Sämaschine nach einem der Ansprüche 1 bis 11,
**dadurch gekennzeichnet**, daß die Perforationen der perforierten Trommel (2) verstellbar sind, beispielsweise durch Superposition eines perforierten Teiles, dessen Perforationen mit den Perforationen der Trommel (2) ausgerichtet sind und einen geringeren Durchmesser haben.

13. Präzisions-Sämaschine nach einem der Ansprüche 1 bis 12,
**dadurch gekennzeichnet**, daß sie Mittel zum Ausblenden einer oder mehrerer Reihen aufweist, beispielsweise durch einen rückstellbaren Abweiser, der alle Samenkörner (3) von der entsprechenden Reihe abweist, oder durch Verschließen der Perforationen der entsprechenden Reihe.
